# EUROPEAN PATENT APPLICATION

(11) **EP 3 040 850 A1**
(43) Date of publication of application: **06.07.2016**
(21) Application number: 15202851.0
(22) Date of filing: 29.12.2015
(51) Int. Cl.: G06F 3/14, H04N 5/232

(54) **METHODS AND APPARATUSES FOR DIRECTIONAL VIEW IN PANORAMIC CONTENT**

(30) Priority: 30.12.2014 US 201414586286
(71) Applicant: Nokia Technologies Oy, 02610 Espoo (FI)
(72) Inventor: MATE, Sujeet Shyamsundar, 33720 Tampere (FI); LEPPÄNEN, Jussi, 33580 Tampere (FI); BABAHAJIANI, Pouria, 33720 Tampere (FI); FU, Junsheng, 33720 Tampere (FI)
(74) Representative: Seppo Laine Oy

(57) **Abstract**

A method, apparatus, and computer program product are provided in order to provide directional viewing in panoramic video content. In the context of a method, the method includes determining, using a processor, a baseline instantaneous dominant heading for segments in panoramic video content. The method further includes determining a viewing preference indication and causing a view of the panoramic video content to be provided for display based on the determined viewing preference indication and the baseline instantaneous dominant heading. A corresponding apparatus and a computer program product are also provided.

## Description

### TECHNOLOGICAL FIELD

An example embodiment of the present invention relates generally to panoramic video content, and more specifically, to providing for improved viewing of panoramic video content.

### BACKGROUND

A number of deficiencies and problems associated with panoramic video content are identified herein. Through applied effort, ingenuity, and innovation, exemplary solutions to many of these identified problems are embodied by the present invention, which is described in detail below.

Panorama content capture devices are increasingly becoming common in the marketplace. Improvements in panoramic content capture device form factors are making it feasible to provide such capture devices as mobile devices as well as wearable devices.

360-degree panoramic content generally covers all the views (at least in the horizontal plane) from the capture point, and has a variety of applications in outdoor sports, navigation, tourism, and the like. The combination of 360-degree panoramic video content capturing devices on movable platforms (for example on a sportsperson's head, on sky diver's head, going around a tourist location with a head mounted or wearable glasses mounted device, etc.) introduces new challenges with respect to providing a pleasant content consumption experience for a viewer, since the baseline view can be changing frequently.

For panoramic video recordings, the viewer can lose orientation if the rendered view always strictly follows the recording user's orientation/direction, i.e., when the instantaneous viewing direction of the recording user is used to define the cardinal view direction in 360-degree panoramic content.

### BRIEF SUMMARY

Methods, apparatuses, and computer program products are therefore provided according to example embodiments of the present invention to provide directional viewing in panoramic video content to provide an improved viewing experience.

In one embodiment, a method is provided that at least comprises determining, using a processor, a baseline instantaneous dominant heading for segments in panoramic video content; determining a viewing preference indication; and causing a view of the panoramic video content to be provided for display based on the determined viewing preference indication and the baseline instantaneous dominant heading.

In some embodiments, the methods may further wherein the baseline instantaneous dominant heading for segments in the panoramic video content is equivalent to an instantaneous movement heading for the segments

In some embodiments, the method may further comprise determining, using the processor, one or more of an instantaneous movement heading and an instantaneous recorder heading for segments in the panoramic video content; and causing a view of the panoramic video content to be provided for display based on the determined viewing preference indication and one or more of the baseline instantaneous dominant heading, instantaneous movement heading, and instantaneous recorder heading.

In some embodiments, the methods may further comprise receiving the panoramic video content; receiving recorder context data associated with the recording of the panoramic video content; combining the panoramic video content and the associated recorder context data; and analyzing, using the processor, the combined panoramic video content and the associated recorder context data to determine one or more of the baseline instantaneous dominant heading, the instantaneous movement heading, and the instantaneous recorder heading for segments of the panoramic video content.

In some embodiments, the methods may further comprise wherein the recording media context data associated with the recording of the panoramic video content comprises one or more of motion sensor data or location sensor data. The motion sensor data may comprise one or more of gyroscope data, accelerometer data, altimeter data, or magnetic compass data. The location sensor data may comprise one or more of geographic positioning system data or camera pose estimate trace data.

In some embodiments, the methods may further comprise determining a fine-tuned instantaneous dominant heading based at least in part on a recording context of the panoramic video content in conjunction with one or more of the baseline instantaneous dominant heading, the instantaneous movement heading, and the instantaneous recorder heading; and causing a view of the panoramic video content corresponding to the fine-tuned instantaneous dominant heading to be provided for display.

In some embodiments, the methods may further comprise storing one or more of the baseline instantaneous dominant heading, the instantaneous movement heading, and the instantaneous recorder heading as metadata embedded in a video file of the panoramic video content; and causing a view of the panoramic video file to be provided for display based on the metadata.

In some embodiments, the methods may further comprise cropping a field of view from the panoramic video content based on one or more of the baseline instantaneous dominant heading, the instantaneous movement heading, and the instantaneous recorder heading; and providing a video view corresponding to the cropped field of view.

In some embodiments, the methods may further comprise determining the baseline instantaneous dominant heading using additional data, wherein the additional data comprises a recording user profile.

In some embodiments, the method may further comprise matching the panoramic video content with a globally registered database, the globally registered database comprising media data with six degree-of-freedom global camera pose data; generating, using the processor, a global-camera pose estimate trace using the recorded panoramic video and the matched globally registered database data; matching the global-camera pose estimate trace with a points of interest trace, wherein the points of interest trace comprises defined routes or points of interest; and determining, using the processor, a baseline instantaneous dominant heading, wherein the baseline instantaneous dominant heading comprises global-camera pose estimate trace segments which coincide with defined routes or points of interest in the points of interest trace.

In another embodiment, an apparatus is provided that includes at least one processor; and at least one memory including computer program instructions; the at least one memory and the computer program instructions configured to, with the at least one processor, cause the apparatus at least to determine a baseline instantaneous dominant heading for segments in panoramic video content; determine a viewing preference indication; and cause a view of the panoramic video content to be provided for display based on the determined viewing preference indication and the baseline instantaneous dominant heading.

In some embodiments, the apparatus may further comprise wherein the baseline instantaneous dominant heading for segments in the panoramic video content is equivalent to an instantaneous movement heading for the segments.

In some embodiments, the apparatus may further comprise the at least one memory and the computer program instructions configured to, with the at least one processor, further cause the apparatus at least to determine one or more of an instantaneous movement heading and an instantaneous recorder heading for segments in the panoramic video content; and cause a view of the panoramic video content to be provided for display based on the determined viewing preference indication and one or more of the baseline instantaneous dominant heading, instantaneous movement heading, and instantaneous recorder heading.

In some embodiments, the apparatus may further comprise the at least one memory and the computer program instructions configured to, with the at least one processor, further cause the apparatus to receive the panoramic video content; receive recorder context data associated with the recording of the panoramic video content; combine the panoramic video content and the associated recorder context data; and analyze the combined panoramic video content and the associated recorder context data to determine one or more of the baseline instantaneous dominant heading, the instantaneous movement heading, and the instantaneous recorder heading for segments of the panoramic video content.

In some embodiments, the apparatus may further comprise wherein the recorder context data associated with the recording of the panoramic video content comprises one or more of motion sensor data or location sensor data. The motion sensor data may comprise one or more of gyroscope data, accelerometer data, altimeter data, or magnetic compass data. The location sensor data may comprise one or more of geographic positioning system data or camera pose estimate trace data.

In some embodiments, the apparatus may further comprise the at least one memory and the computer program instructions configured to, with the at least one processor, further cause the apparatus at least to determine a fine-tuned instantaneous dominant heading based at least in part on a recording context of the panoramic video content in conjunction with one or more of the baseline instantaneous dominant heading, the instantaneous movement heading, and the instantaneous recorder heading; and cause the apparatus to cause a view of the panoramic video content corresponding to the fine-tuned instantaneous dominant heading to be provided for display.

In some embodiments, the apparatus may further comprise the at least one memory and the computer program instructions configured to, with the at least one processor, further cause the apparatus at least to store one or more of the baseline instantaneous dominant heading, the instantaneous movement heading, and the instantaneous recorder heading as metadata embedded in a video file of the panoramic video content; and cause a view of the panoramic video file to be provided for display based on the metadata.

In some embodiments, the apparatus may further comprise the at least one memory and the computer program instructions configured to, with the at least one processor, further cause the apparatus at least to crop a field of view from the panoramic video content based on one or more of the baseline instantaneous dominant heading, the instantaneous movement heading, and the instantaneous recorder heading; and provide a video view corresponding to the cropped field of view.

In some embodiments, the apparatus may further comprise the at least one memory and the computer program instructions configured to, with the at least one processor, further cause the apparatus at least to determine the baseline instantaneous dominant heading using additional data, wherein the additional data comprises a recording user profile.

In some embodiments, the apparatus may further comprise the at least one memory and the computer program instructions configured to, with the at least one processor, further cause the apparatus at least to match the panoramic video content with a globally registered database, the globally registered database comprising media data with six degree-of freedom global camera pose data; generate a global-camera pose estimate trace using the recorded panoramic video and the matched globally registered database data; match the global-camera pose estimate trace with a points of interest trace, wherein the points of interest trace comprises defined routes or points of interest; and determine a baseline instantaneous dominant heading, wherein the baseline instantaneous dominant heading comprises global-camera pose estimate trace segments which coincide with defined routes or points of interest in the points of interest trace.

In a further embodiment, a computer program product is provided comprising at least one non-transitory computer-readable storage medium bearing computer program instructions embodied therein for use with a computer with the computer program instructions including program instructions configured to cause the computer to determine a baseline instantaneous dominant heading for segments in panoramic video content; determine a viewing preference indication; and cause a view of the panoramic video content to be provided for display based on the determined viewing preference and the baseline instantaneous dominant heading to be provided.

In some embodiments, the computer program product may further comprise computer program instructions including program instructions configured to cause the computer to determine one or more of an instantaneous movement heading and an instantaneous recorder heading for segments in the panoramic video content; and cause a view of the panoramic video content to be provided for display based on the determined viewing preference indication and one or more of the baseline instantaneous dominant heading, instantaneous movement heading, and instantaneous recorder heading.

In another embodiment, an apparatus is provided that comprises at least means for determining a baseline instantaneous dominant heading for segments in panoramic video content; means for determining a viewing preference indication; and means for causing a view of the panoramic video content to be provided for display based on the determined viewing preference indication and the baseline instantaneous dominant heading.

In some embodiments, the apparatus may further wherein the baseline instantaneous dominant heading for segments in the panoramic video content is equivalent to an instantaneous movement heading for the segments

In some embodiments, the apparatus may further comprise means for determining one or more of an instantaneous movement heading and an instantaneous recorder heading for segments in the panoramic video content; and means for causing a view of the panoramic video content to be provided for display based on the determined viewing preference indication and one or more of the baseline instantaneous dominant heading, instantaneous movement heading, and instantaneous recorder heading.

In some embodiments, the apparatus may further comprise means for receiving the panoramic video content; means for receiving recorder context data associated with the recording of the panoramic video content; means for combining the panoramic video content and the associated recorder context data; and means for analyzing, using the processor, the combined panoramic video content and the associated recorder context data to determine one or more of the baseline instantaneous dominant heading, the instantaneous movement heading, and the instantaneous recorder heading for segments of the panoramic video content.

In some embodiments, the apparatus may further comprise wherein the recording media context data associated with the recording of the panoramic video content comprises one or more of motion sensor data or location sensor data. The motion sensor data may comprise one or more of gyroscope data, accelerometer data, altimeter data, or magnetic compass data. The location sensor data may comprise one or more of geographic positioning system data or camera pose estimate trace data.

In some embodiments, the apparatus may further comprise means for determining a fine-tuned instantaneous dominant heading based at least in part on a recording context of the panoramic video content in conjunction with one or more of the baseline instantaneous dominant heading, the instantaneous movement heading, and the instantaneous recorder heading; and means for causing a view of the panoramic video content corresponding to the fine-tuned instantaneous dominant heading to be provided for display.

In some embodiments, the apparatus may further comprise means for storing one or more of the baseline instantaneous dominant heading, the instantaneous movement heading, and the instantaneous recorder heading as metadata embedded in a video file of the panoramic video content; and means for causing a view of the panoramic video file to be provided for display based on the metadata.

In some embodiments, the apparatus may further comprise means for cropping a field of view from the panoramic video content based on one or more of the baseline instantaneous dominant heading, the instantaneous movement heading, and the instantaneous recorder heading; and means for providing a video view corresponding to the cropped field of view.

In some embodiments, the apparatus may further comprise means for determining the baseline instantaneous dominant heading using additional data, wherein the additional data comprises a recording user profile.

In some embodiments, the apparatus may further comprise means for matching the panoramic video content with a globally registered database, the globally registered database comprising media data with six degree-of-freedom global camera pose data; means for generating a global-camera pose estimate trace using the recorded panoramic video and the matched globally registered database data; means for matching the global-camera pose estimate trace with a points of interest trace, wherein the points of interest trace comprises defined routes or points of interest; and means for determining, using the processor, a baseline instantaneous dominant heading, wherein the baseline instantaneous dominant heading comprises global-camera pose estimate trace segments which coincide with defined routes or points of interest in the points of interest trace.

### BRIEF DESCRIPTION OF THE DRAWINGS

Having thus described certain embodiments of the invention in general terms, reference will now be made to the accompanying drawings, which are not necessarily drawn to scale, and wherein:
Figure 1 illustrates a block diagram of an apparatus that may be specifically configured in accordance with an example embodiment of the present invention;
Figure 2 illustrates an example of a panoramic video view centered on the instantaneous gaze orientation of the recording user;
Figure 3 illustrates an example of a panoramic video view centered on the dominant heading in accordance with an example embodiment of the present invention;
Figure 4 illustrates an exemplary overview of a directional panoramic video content system in accordance with an example embodiment of the present invention;
Figure 5 illustrates situations regarding alignment of the instantaneous movement heading and the instantaneous recorder heading with the instantaneous dominant heading in accordance with an example embodiment of the present invention;
Figure 6 illustrates a flow chart of operations for providing directional panoramic content viewing performed by an apparatus in accordance with an example embodiment of the present invention; and
Figure 7 illustrates a flow chart of operations for providing directional panoramic content viewing performed by an apparatus in accordance with an example embodiment of the present invention.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (e.g., volatile or non-volatile memory device), can be differentiated from a "computer-readable transmission medium," which refers to an electromagnetic signal.

Method, apparatuses, and computer program products are provided in accordance with example embodiments of the present invention to provide directional viewing in panoramic video content allowing for an improved viewing experience.

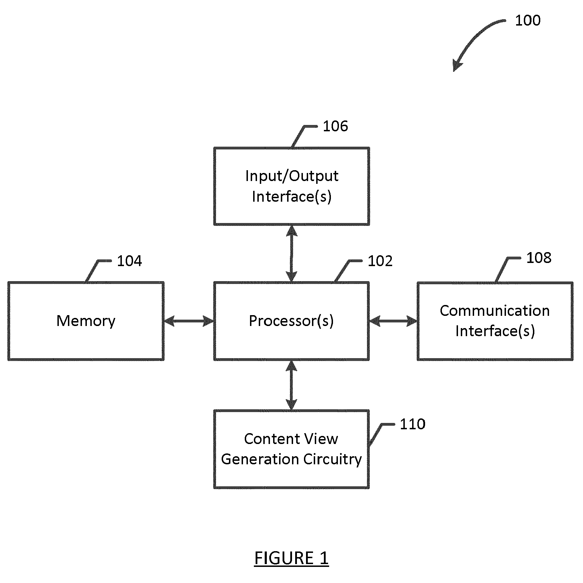

Referring to Figure 1, an apparatus 100 for providing panoramic video content in accordance with an example embodiment may include or otherwise be in communication with one or more of at least one processor 102, at least one memory 104, at least one communication interface 106, at least one input/output interface 108, and a content view generation module 110.

It should be noted that while Figure 1 illustrates one example of a configuration of an apparatus 100 for providing directional viewing of panoramic video content, numerous other configurations may also be used to implement other embodiments of the present invention. As such, in some embodiments, although devices or elements are shown as being in communication with each other, hereinafter such devices or elements should be considered to be capable of being embodied within the same device or element and thus, devices or elements shown in communication should be understood to alternatively be portions of the same device or element.

In some embodiments, the processor (and/or co-processors or any other processing circuitry assisting or otherwise associated with the processor) may be in communication with the memory 104 via a bus for passing information among components of the apparatus. The memory 104 may include, for example, a non-transitory memory, such as one or more volatile and/or non-volatile memories. In other words, for example, the memory 104 may be an electronic storage device (e.g., a computer readable storage medium) comprising gates configured to store data (e.g., bits) that may be retrievable by a machine (e.g., a computing device like the processor). The memory 104 may be configured to store information, data, content, applications, instructions, or the like for enabling the apparatus to carry out various functions in accordance with an example embodiment of the present invention. For example, the memory 104 could be configured to buffer input data for processing by the processor 102. Additionally or alternatively, the memory could be configured to store instructions for execution by the processor.

In some embodiments, the apparatus 100 may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 102 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 102 may be configured to execute instructions stored in the memory 104 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA, or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device configured to employ an embodiment of the present invention by further configuration of the processor by instructions for performing the algorithms and/or operations described herein. The processor may include, among other things, a clock, an arithmetic logic unit (ALU), and logic gates configured to support operation of the processor.

The communication interface 106 may be any means such as a device or circuitry embodied in either hardware or a combination of hardware and software that is configured to receive and/or transmit data from/to a network and/or any other device or module in communication with the apparatus 100. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB), Ethernet, High-Definition Multimedia Interface (HDMI), or other mechanisms. Furthermore, the communication interface 106 may include hardware and/or software for supporting communication mechanisms such as BLUETOOTH®, Infrared, UWB, WiFi, and/or the like.

The apparatus 100 may include an input/output interface 108 that may, in turn, be in communication with the processor 102 to receive input from and to provide output to a user. For example, the input/output interface may include a display and, in some embodiments, may also include a keyboard, a mouse, a joystick, a touch screen, touch areas, soft keys, a microphone, a speaker, or other input/output mechanisms. The processor may comprise user interface circuitry configured to control at least some functions of one or more input/output interface elements such as a display and, in some embodiments, a speaker, ringer, microphone, and/or the like. The processor and/or user interface circuitry comprising the processor may be configured to control one or more functions of one or more input/output interface elements through computer program instructions (e.g., software and/or firmware) stored on a memory accessible to the processor (e.g., memory 104, and/or the like).

The apparatus 100 may include content view generation circuitry 110, which may be configured to receive recorded panoramic video content, along with recording media context data, and optionally, recording context data, to analyze the recorded panoramic video content, recording media context data, and optional recording context data to generate various parameters, and to generate, using the various parameters, one or more views of the recorded panoramic video content and/or store metadata associated with one or more views of the recorded panoramic video content. The content view generation circuitry 110 may be implemented using hardware components of apparatus 100 configured by either hardware or software for implementing these features. For example, content view generation circuitry 110 may utilize processing circuitry, such as processor 102 and memory 104, to perform such operations.

Panorama content capture devices are increasingly becoming common in the marketplace. Improvements in panoramic content capture device form factors are making it feasible to provide such capture devices as mobile devices as well as wearable devices. 360-degree panoramic content generally covers all the views (at least in the horizontal plane) from the capture point, and has a variety of applications in outdoor sports, navigation, tourism, and the like. The combination of 360-degree panoramic video content capturing devices on movable platforms (for example on a sportsperson's head, on sky diver's head, going around a tourist location with a head mounted or wearable glasses mounted device, etc.) introduces new challenges with respect to providing a pleasant content consumption experience for a viewer, since the baseline view can be changing frequently.

For panoramic video recordings, the viewer can lose orientation if the rendered view always strictly follows the recording user's orientation/direction, i.e., when the instantaneous viewing direction of the recording user is used to define the cardinal view direction in 360-degree panoramic content.

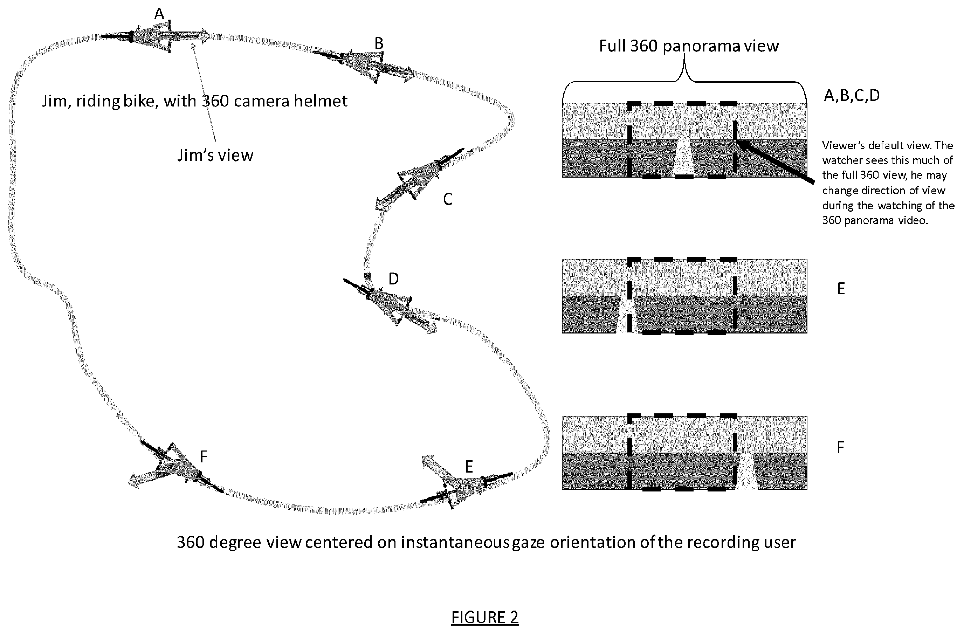

Figure 2 provides an example illustration of this problem. If the default view of the panoramic video content presented to a viewing user is the exact view which traces the recording user's instantaneous viewing directions, it is highly likely that the presented view will have multiple fast gaze shifting (depending on the exact recording scenarios). These presented views may consist of a high amount of rapid changes in horizontal orientation as well as vertical orientation. This may result in the viewer of such a default view being disoriented or may provide a poor viewing experience to the viewer.

As illustrated in Figure 2, when the recording user is at positions E and F, the instantaneous viewing direction follows the recording user's gaze shifts to the right and left and the view provided to the viewing user jumps to these positions in the panoramic video content.

Embodiments of the present invention are directed to methods, apparatuses, and computer program products which improve the viewing of video content captured using 360-degree panoramic content capture devices mounted on a movable platform (for example, a wearable device, mobile device, head-mounted camera, etc.), such as making viewing such content pleasant and meaningful to a viewer. In example embodiments, the methods and apparatuses provide for a semantically consistent default view, provide a pleasant viewing experience for panoramic video content, and may prevent disorientation of the viewer while watching the 360-degree panoramic video recording. Some embodiments may also provide video content suitable for viewing the higher resolution 360-degree content on a smaller display which can only show a part of the full panorama.

In an example embodiment, providing directional viewing in panoramic video content comprises determining the instantaneous dominant heading (IDH) of segments of the panoramic content recording. The instantaneous dominant heading is the dominant heading of the movement of the movable platform determined for a particular time instance or segment of the content. The instantaneous dominant heading may be determined based on recorder context data such as motion data, sensor data, GPS data, or the like, associated with the content capture device and/or the recording user. For example, the associated data may provide information regarding the recording user's orientation and/or movement which may then be used in determining the baseline instantaneous dominant heading. In some embodiments, motion sensors and/or location sensors may be associated with the content capture device and/or the recording user (or movable platform) and may provide associated recorder context data, e.g., motion and/or location data, for the captured panoramic video content. In some embodiments, additional data may also be used in determining the baseline instantaneous dominant heading, such as a recording user's profile preferences. In some embodiments, a view of the panoramic video content corresponding to the instantaneous dominant heading is provided as the default view to a viewing user.

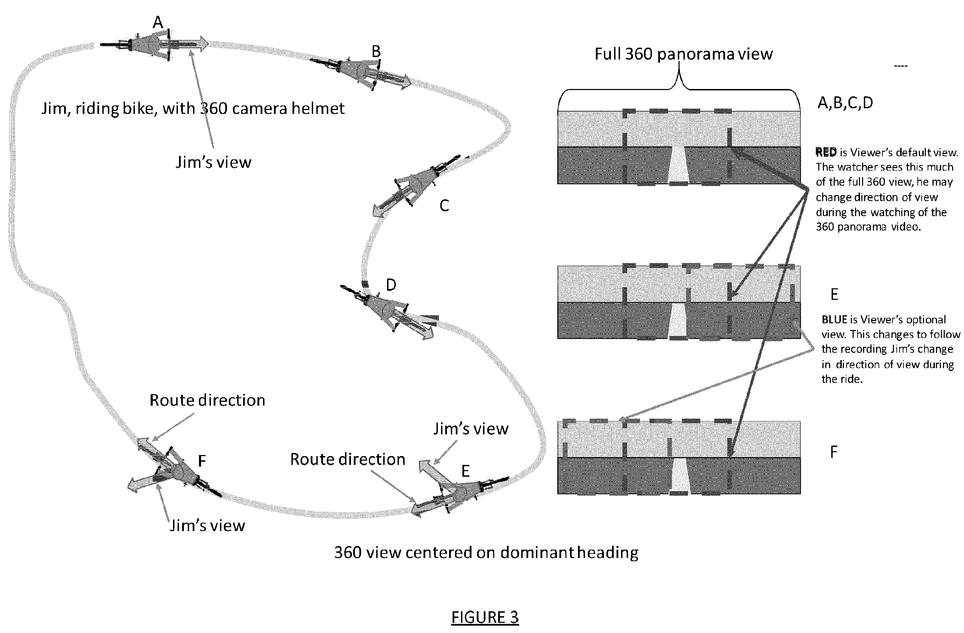

In some embodiments, when the recording user's instantaneous viewing direction changes with respect to the instantaneous dominant heading, for example, when a recording user wearing a head-mounted camera turns the direction of his gaze, the viewing user may be notified that a new or alternative view of the content is available, but the current view being rendered is not immediately changed. In such embodiments, the viewing user may select to see the new/alternate view and the viewing user may be presented with a view comprising the main heading field of view (the original view or baseline instantaneous dominant heading) along with an overlay of the recording user's field of view (e.g., an instantaneous recorder heading), as illustrated in Figure 3.

In some embodiments, the baseline instantaneous dominant heading may be further fine-tuned if additional information regarding the recording context (e.g., the purpose of the recording) is known. For example, if the content is captured while riding a train for sight-seeing, it may be more useful to provide the side view as the default view. In another example, if the content is captured by a recording user riding a bicycle, it may be more interesting to see the bike trail ahead rather than the random occasional gaze changes which the biker may make for general situational awareness. The recording context may be either determined automatically or interactively with the recording user in various embodiments. The fine-tuned default view may be at an offset with respect to the actual instantaneous dominant heading in some embodiments.

In some embodiments, an instantaneous movement heading and/or an instantaneous recorder heading may also be determined for segments of the panoramic video content. An instantaneous movement heading indicates the direction of the recording user's motion, i.e., the direction of the recording user's mode of transport, for a particular instance or segment of the content. In some embodiments, the instantaneous movement heading may indicate the instantaneous trajectory of the content capture system at any instance. For example, if the content is captured by a recording user riding a bicycle, the instantaneous movement heading comprises the direction that the bicycle is moving in at the particular instance. An instantaneous recorder heading indicates the orientation of the content capture device reference point. For example, in the case where the content capture device is a head-mounted camera, the instantaneous recorder heading would correspond to the direction the recording user's head is facing at a particular instance, e.g., which direction the recording user has turned to look. In another example, for a hand-held capture device having a "front direction" reference point, the instantaneous recorder heading would correspond to the direction the "front direction" reference point is pointed at for a particular instance or segment (e.g., in a 270 degree panoramic video, the "front direction" reference point may be the center point between 0 degrees and 270 degrees of the capture frame).

In some situations, the instantaneous dominant heading may be equivalent to, or match, the instantaneous movement heading may replace the instantaneous dominant heading in such embodiments.

In some embodiments, the instantaneous dominant heading may be determined using some combination of the parameters of the instantaneous movement heading and the instantaneous recorder heading for the segments of the panoramic video content. In some embodiments, the determination of the instantaneous dominant heading may also comprise the use of additional information such as recorder context data, recording context, recording user profile data, and/or the like, in addition to one or more of the instantaneous movement heading and the instantaneous recorder heading.

In another example embodiment, the recorded video content may be matched with a globally registered database, such as outdoor street-view data, geo-tagged image data, or similar media data having six degree-of-freedom (6 DOF) camera pose information, to generate a global-camera pose estimation (CPE) trace. Subsequently, the global-CPE trace is matched with a point of interest (POI)-locations trace (which may include, but is not limited to, important streets, bike routes, etc.) The CPE trace segments which coincide with the known streets, trails, etc. may be used as the baseline instantaneous dominant heading. In some embodiments, the baseline instantaneous dominant heading may be fine-tuned further to include significant POIs, if desired, such as based on the user's preference profile for the service.

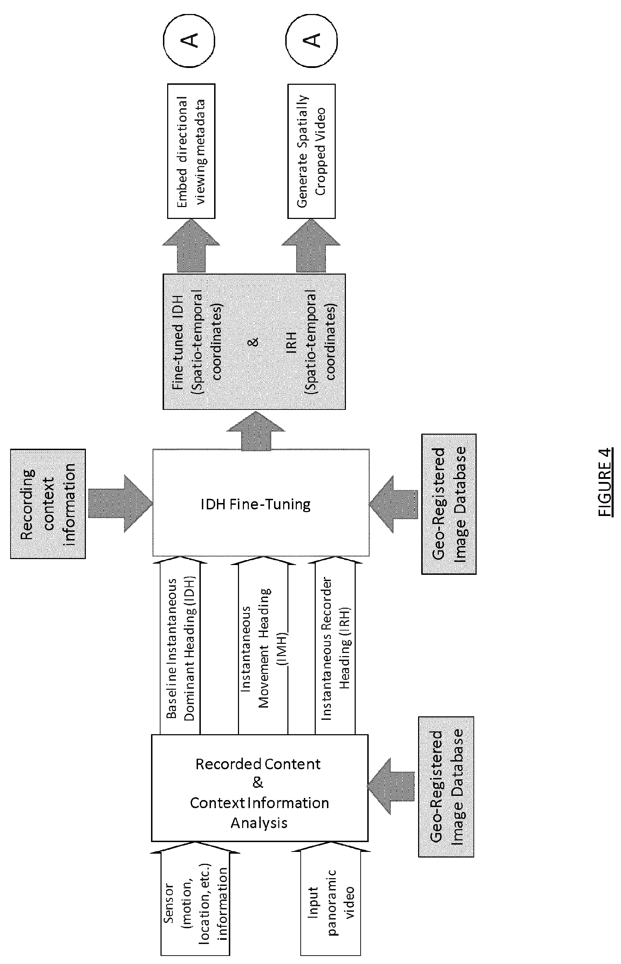

Figure 4 illustrates a system overview of a directional panoramic video content system according to some example embodiments. In an example embodiment, the directional panoramic video content system first receives the panoramic video content and associated recorder context data. The recorder context data may comprise one or more of motion sensor information, e.g., data from one or more of a gyroscope, accelerometer, altimeter, magnetic compass, and the like, or location sensor information, e.g., GPS location information, camera pose estimate (CPE) trace information, or the like, associated with the content capture device and/or recording user.

The recorded panoramic video content and the associated recorder context data is combined, aligned if necessary, and then analyzed. The analysis of the combined recorded panoramic video content and associated recorder context information determines the baseline instantaneous dominant heading (IDH), the instantaneous movement heading (IMH), and the instantaneous recorder heading (IRH) by taking into account the overall trajectory of the content capture system as well as the instantaneous trajectory of the content capture system. The baseline instantaneous dominant heading, instantaneous movement heading, and instantaneous recorder heading may be determined for defined time periods in the panoramic video content or may be determined periodically with short intervals (e.g., milliseconds, seconds, etc.) between determinations in some embodiments.

The overall trajectory is influenced by the changes as well as persistence in the instantaneous trajectory. For example, if the overall trajectory based on the movement in the past is 30 degrees with respect to the north, a change in the instantaneous trajectory would result in slow shifting of the overall trajectory. If the instantaneous trajectory continues for longer, the overall trajectory would eventually converge with the instantaneous trajectory. This approach allows for a smooth transition while viewing the content and avoids drastic camera angle movements which can result in an unpleasant viewing experience. In some embodiments, the baseline instantaneous dominant heading takes into account the recorder context data (e.g., movement/location) to determine the overall trajectory.

In some embodiments, the instantaneous movement heading indicates the instantaneous trajectory of the content capture system at any instance. For example, if the content is captured by a recording user riding a bicycle, the instantaneous movement heading comprises the direction that the bicycle is moving in at the particular instance. The instantaneous recorder heading indicates the orientation of the recording device reference point. For example, in the case where the content capture device is a head-mounted camera, the instantaneous recorder heading would correspond to the direction the recording user's head is facing at a particular instance. In another example, for a hand-held capture device having a "front direction" reference point, the instantaneous recorder heading would correspond to the direction the "front direction" reference point is pointed at a particular instance (e.g., in a 270 degree panoramic video, the "front direction" reference point may be the center point between 0 degrees and 270 degrees of the capture frame). In some embodiments, the instantaneous dominant heading may be determined using some combination of the parameters of the instantaneous movement heading and the instantaneous recorder heading, as well as additional information, for the segments of the panoramic video content.

The baseline instantaneous dominant heading, instantaneous movement heading, and instantaneous recorder heading are used in conjunction with the recording context information (i.e., the purpose of the recording, for example, a bicycle track recording, a sidewalk stroll as a tourist, etc.) to determine the fine-tuned instantaneous dominant heading. The fine-tuned instantaneous dominant heading may have an offset with respect to the baseline instantaneous dominant heading, the instantaneous movement heading, as well as the instantaneous recorder heading. In some embodiments, points of interest (POI) information may also be accessed using various geo-location-registered content, e.g., a geo-registered image database, and the POI information may be used in determining the fine-tuned instantaneous dominant heading.

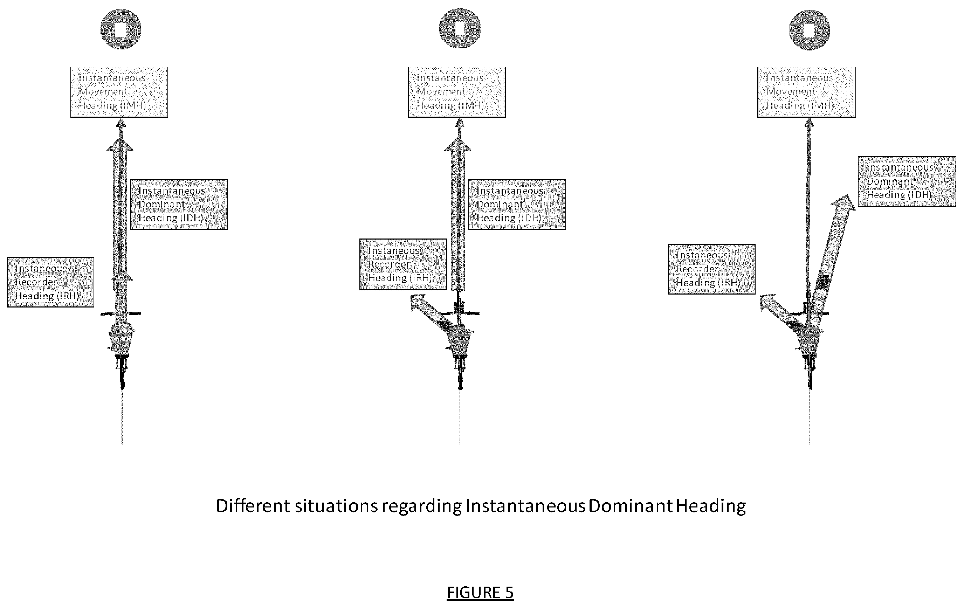

Figure 5 illustrates different situations regarding alignment of the instantaneous movement heading and the instantaneous recorder heading with the instantaneous dominant heading. In Example A, the instantaneous recorder heading, the instantaneous movement heading, and the instantaneous dominant heading are aligned (i.e., the overall trajectory and the instantaneous trajectory are aligned and the recorder is facing in the direction of the trajectory). Example B illustrated the case where the instantaneous dominant heading and instantaneous movement heading are aligned but the instantaneous recorder heading may be in a different direction (i.e., the overall trajectory and the instantaneous trajectory are aligned and the recorder, e.g., capture device/recording user, is facing in a different direction). Example C is the most generic situation where the instantaneous dominant heading, the instantaneous movement heading, and the instantaneous recorder heading may be at different angles at a given instance (i.e., the overall trajectory and the instantaneous trajectory are in different directions and the capture device/recording user is facing/pointed in a different direction from either trajectory).

In some embodiments, the instantaneous dominant heading, instantaneous movement heading, and instantaneous recorder heading may be stored as metadata in the panoramic video content file, e.g., as embedded directional viewing metadata, for use in providing panoramic content viewing. In some embodiments, one or more views of a desired resolution or desired field of view may be cropped from the original panoramic video content. The content viewing system may then provide this cropped view to a viewing user. For example, the content viewing system may provide a view corresponding to the instantaneous movement heading following the path the recorder has taken or a view corresponding to the instantaneous dominant heading taking into account head movements in a smooth and pleasurable manner, or the like.

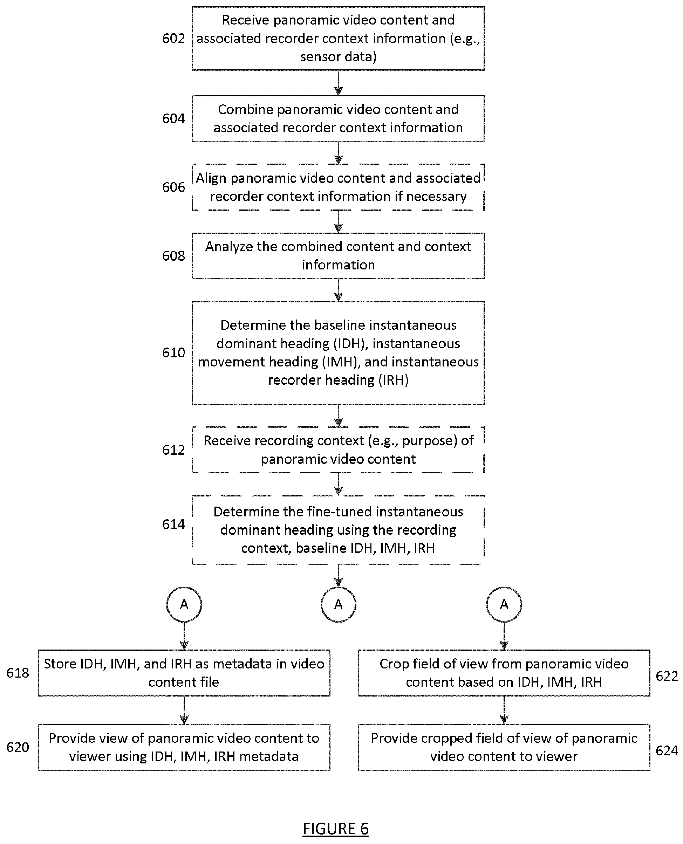

The method, apparatus, and computer program product may now be described in conjunction with the operations illustrated in Figure 6. In this regard, the apparatus 100 may include means, such as the processor 102, memory 104, communication interface 106, content view generation circuitry 110, or the like, for receiving the recorded panoramic video content and the associated recorder context data at block 602 of Figure 6. The associated recorder context data may comprise motion sensor data and/or location sensor data associated with a content capture device during the recording of the panoramic video content.

As shown in block 604 of Figure 6, the apparatus 100 may also include means, such as the processor 102, memory 104, content view generation circuitry 110, or the like, for combining the received recorded panoramic video content and the associated recorder context data. Optionally, the apparatus 100 may also include means, such as the processor 102, memory 104, content view generation circuitry 110, or the like, for aligning the recorded panoramic video content and the associated recorder context data if necessary, as shown in block 606 of Figure 6.

As shown in block 608 of Figure 6, the apparatus 100 may also include means, such as the processor 102, memory 104, content view generation circuitry 110, or the like, for analyzing the combined panoramic video content and associated recorder context data. As shown in block 610 of Figure 6, the apparatus 100 may also include means, such as the processor 102, memory 104, content view generation circuitry 110, or the like, for determining one or more of the baseline instantaneous dominant heading, the instantaneous movement heading, and the instantaneous recorder heading for segments of the panoramic video content, as a result of the analysis at block 608. In some embodiments, the apparatus may determine each of the baseline instantaneous dominant heading, the instantaneous movement heading, and the instantaneous recorder heading for the segments of the content and use some combination of the three parameters, and optionally other information, in determining views that may be provided to a viewing user.

As shown in block 612 of Figure 6, the apparatus 100 may also include means, such as the processor 102, memory 104, content view generation circuitry 110, input/output interface 108, or the like, for optionally receiving or determining the recording context for the panoramic video content. As shown in block 614 of Figure 6, the apparatus 100 may also include means, such as the processor 102, memory 104, content view generation circuitry 110, or the like, for fine-tuning the instantaneous dominant heading based on the recording context, the baseline instantaneous dominant heading, the instantaneous movement heading, and the instantaneous recorder heading.

The apparatus 100 may also include means, such as the processor 102, memory 104, content view generation circuitry 110, or the like, for storing the instantaneous dominant heading, the instantaneous movement heading, and the instantaneous recorder heading as metadata embedded in a panoramic video content file, as shown in block 616 of Figure 6. The apparatus 100 may also include means, such as the processor 102, memory 104, content view generation circuitry 110, input/output interface 108, communications interface 106, or the like, for causing a directional view of the panoramic video content to be provided to a viewer based on the embedded metadata in the panoramic video content file, as shown in block 618 of Figure 6.

Alternatively or additionally, the apparatus 100 may also include means, such as the processor 102, memory 104, content view generation circuitry 110, or the like, for cropping a view of a desired resolution or a desired field of view from the panoramic video content based on the instantaneous dominant heading, the instantaneous movement heading, and/or the instantaneous recorder heading, as shown in block 620 of Figure 6. As shown in block 622 of Figure 6, the apparatus 100 may also include means, such as the processor 102, memory 104, content view generation circuitry 110, input/output interface 108, communications interface 106, or the like, for causing the cropped view of the panoramic video content to be provided to a viewer.

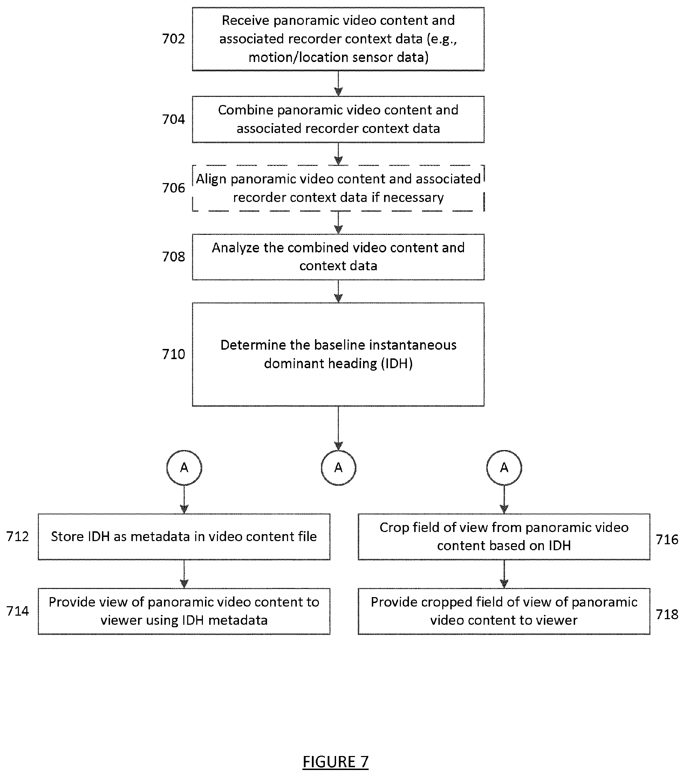

Figure 7 illustrates operations according to another example embodiment. The apparatus 100 may include means, such as the processor 102, memory 104, communication interface 106, content view generation circuitry 110, or the like, for receiving the recorded panoramic video content and the associated recorder context data at block 702 of Figure 7. The associated recorder context data may comprise motion sensor data and/or location sensor data associated with a content capture device during the recording of the panoramic video content.

As shown in block 704 of Figure 7, the apparatus 100 may also include means, such as the processor 102, memory 104, content view generation circuitry 110, or the like, for combining the received recorded panoramic video content and the associated recorder context data. Optionally, the apparatus 100 may also include means, such as the processor 102, memory 104, content view generation circuitry 110, or the like, for aligning the recorded panoramic video content and the associated recorder context data if necessary, as shown in block 706.

As shown in block 708, the apparatus 100 may also include means, such as the processor 102, memory 104, content view generation circuitry 110, or the like, for analyzing the combined panoramic video content and associated recorder context data. As shown in block 710, the apparatus 100 may also include means, such as the processor 102, memory 104, content view generation circuitry 110, or the like, for determining the baseline instantaneous dominant heading for segments of the panoramic video content, as a result of the analysis at block 708.

The apparatus 100 may also include means, such as the processor 102, memory 104, content view generation circuitry 110, or the like, for storing the instantaneous dominant heading as metadata embedded in a panoramic video content file, as shown in block 712. The apparatus 100 may also include means, such as the processor 102, memory 104, content view generation circuitry 110, input/output interface 108, communications interface 106, or the like, for causing a directional view of the panoramic video content to be provided to a viewer based on the embedded metadata in the panoramic video content file, as shown in block 714.

Alternatively or additionally, the apparatus 100 may also include means, such as the processor 102, memory 104, content view generation circuitry 110, or the like, for cropping a view of a desired resolution or a desired field of view from the panoramic video content based on the instantaneous dominant heading as shown in block 716. As shown in block 718, the apparatus 100 may also include means, such as the processor 102, memory 104, content view generation circuitry 110, input/output interface 108, communications interface 106, or the like, for causing the cropped view of the panoramic video content to be provided to a viewer.

As described above, Figures 4, 6, and 7 illustrate operations and flowcharts of an apparatus, method, and computer program product according to example embodiments of the invention. It will be understood that each block of the flowchart, and combinations of blocks in the flowchart, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by a memory 104 of an apparatus employing an embodiment of the present invention and executed by a processor 102 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included, such as shown by the blocks with dashed outlines. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
determining, using a processor, a baseline instantaneous dominant heading for segments in panoramic video content; and
determining a viewing preference indication; and
causing a view of the panoramic video content to be provided for display based on the determined viewing preference indication and the baseline instantaneous dominant heading.

2. The method of Claim 1 further comprising:
determining, using the processor, one or more of an instantaneous movement heading and an instantaneous recorder heading for segments in the panoramic video content; and
causing a view of the panoramic video content to be provided for display based on the determined viewing preference indication and one or more of the baseline instantaneous dominant heading, instantaneous movement heading, and instantaneous recorder heading.

3. The method of Claim 2 further comprising:
receiving the panoramic video content;
receiving recorder context data associated with the recording of the panoramic video content;
combining the panoramic video content and the associated recorder context data; and
analyzing, using the processor, the combined panoramic video content and the associated recorder context data to determine one or more of the baseline instantaneous dominant heading, the instantaneous movement heading, and the instantaneous recorder heading for segments of the panoramic video content.

4. The method of Claim 3 wherein the recording media context data associated with the recording of the panoramic video content comprises one or more of motion sensor data or location sensor data; wherein the motion sensor data comprises one or more of gyroscope data, accelerometer data, altimeter data, or magnetic compass data and wherein the location sensor data comprises one or more of geographic positioning system data or camera pose estimate trace data.

5. The method of Claim 2 further comprising determining a fine-tuned instantaneous dominant heading based at least in part on a recording context of the panoramic video content in conjunction with one or more of the baseline instantaneous dominant heading, the instantaneous movement heading, and the instantaneous recorder heading; and causing a view of the panoramic video content corresponding to the fine-tuned instantaneous dominant heading to be provided for display.

6. An apparatus comprising at least one processor and at least one memory including computer program instructions, the at least one memory and the computer program instructions configured to, with the at least one processor, cause the apparatus at least to:
determine a baseline instantaneous dominant heading for segments in panoramic video content;
determine a viewing preference indication; and
cause a view of the panoramic video content to be provided for display based on the determined viewing preference indication and the baseline instantaneous dominant heading.

7. The apparatus of Claim 6 further comprising the at least one memory and the computer program instructions configured to, with the at least one processor, further cause the apparatus at least to:
determine one or more of an instantaneous movement heading and an instantaneous recorder heading for segments in the panoramic video content; and
cause a view of the panoramic video content to be provided for display based on the determined viewing preference indication and one or more of the baseline instantaneous dominant heading, instantaneous movement heading, and instantaneous recorder heading.

8. The apparatus of Claim 7 further comprising the at least one memory and the computer program instructions configured to, with the at least one processor, further cause the apparatus at least to:
receive the panoramic video content;
receive recorder context data associated with the recording of the panoramic video content;
combine the panoramic video content and the associated recorder context data; and
analyze the combined panoramic video content and the associated recorder context data to determine one or more of the baseline instantaneous dominant heading, the instantaneous movement heading, and the instantaneous recorder heading for segments of the panoramic video content.

9. The apparatus of Claim 8, wherein the recorder context data associated with the recording of the panoramic video content comprises one or more of motion sensor data or location sensor data; wherein the motion sensor data comprises one or more of gyroscope data, accelerometer data, altimeter data, or magnetic compass data and wherein the location sensor data comprises one or more of geographic positioning system data or camera pose estimate trace data.

10. The apparatus of Claim 7 further comprising the at least one memory and the computer program instructions configured to, with the at least one processor, further cause the apparatus to determine a fine-tuned instantaneous dominant heading based at least in part on a recording context of the panoramic video content in conjunction with one or more of the baseline instantaneous dominant heading, the instantaneous movement heading, and the instantaneous recorder heading; and cause the apparatus to cause a view of the panoramic video content corresponding to the fine-tuned instantaneous dominant heading to be provided for display.

11. The apparatus of Claim 7 further comprising the at least one memory and the computer program instructions configured to, with the at least one processor, further cause the apparatus to store one or more of the baseline instantaneous dominant heading, the instantaneous movement heading, and the instantaneous recorder heading as metadata embedded in a video file of the panoramic video content; and cause a view of the panoramic video file to be provided for display based on the metadata.

12. The apparatus of Claim 7 further comprising the at least one memory and the computer program instructions configured to, with the at least one processor, further cause the apparatus to:
crop a field of view from the panoramic video content based on one or more of the baseline instantaneous dominant heading, the instantaneous movement heading, and the instantaneous recorder heading; and
provide a video view corresponding to the cropped field of view.

13. The apparatus of Claim 6 wherein the baseline instantaneous dominant heading for segments in the panoramic video content is equivalent to an instantaneous movement heading for the segments.

14. The apparatus of Claim 6 further comprising the at least one memory and the computer program instructions configured to, with the at least one processor, further cause the apparatus to:
match the panoramic video content with a globally registered database, the globally registered database comprising media data with six degree-of-freedom global camera pose data;
generate a global-camera pose estimate trace using the recorded panoramic video and the matched globally registered database data;
match the global-camera pose estimate trace with a points of interest trace, wherein the points of interest trace comprises defined routes or points of interest; and
determine a baseline instantaneous dominant heading, wherein the baseline instantaneous dominant heading comprises global-camera pose estimate trace segments which coincide with defined routes or points of interest in the points of interest trace.

15. A computer program configured to cause a method in accordance with at least one of claims 1 - 5 to be performed, when run.
